Europäisches Patentamt

European Patent Office

Office européen des brevets

(19)

(11) Publication number: **0 343 308**
**A1**

(12) # EUROPEAN PATENT APPLICATION

(21) Application number: **88500053.9**

(51) Int. Cl.⁴: **H04N 1/10 , H04N 1/40**

(22) Date of filing: **27.05.88**

(43) Date of publication of application:
**29.11.89 Bulletin 89/48**

(84) Designated Contracting States:
**AT BE CH DE ES FR GB GR IT LI LU NL SE**

(71) Applicant: **Rodriguez De Guzman Velazquez, Manuel**
**10 Cardenal Belluga Street**
**E-28028 Madrid(ES)**

Applicant: **Rovira Garcia, Jorge**
**146, Floridablanca Street**
**E-08011 Barcelona(ES)**

(72) Inventor: **Rodriguez De Guzman Velazquez, Manuel**
**10 Cardenal Belluga Street**
**E-28028 Madrid(ES)**
Inventor: **Rovira Garcia, Jorge**
**146, Floridablanca Street**
**E-08011 Barcelona(ES)**

(74) Representative: **Molero Moraleda, Felipe**
**RAFPATENT OFFICE 62, Gran Via Street**
**E-28013 Madrid(ES)**

(54) **System and apparatus of digitalization and indentification of sings and/or facsimiles.**

(57) System and apparatus of digitalization and identification of sings and/or facsimiles comprising the
exposure of document with a specific and precise
delimitation of the taking of the image, with a builtin
ilumination of same and the contour; the disposition
of an optical route of the image; the visualization of
the image prior to the digitalization; the digitalization
of the image, control of sensibility of said digitalization and visualization of the result of the process. It
is especially applicable for the contrast and verifica-
tion of facsimiles in the operations of banks.

Fig.-1

## SYSTEM AND APPARATUS OF DIGITALIZATION AND IDENTIFICATION OF SINGS AND/OR FACSIMILES.

### INTRODUCTION:

The system as per the invention is a development conceived to cover the needs of the verification of signatures at banks.

There are multiple systems in the market capable of making the capture and treatment of graphic images through a computer, and it is our work in this case is to explain the distinctive characteristics that make the invention a unique system, not only by the philosophy used but also by the hardware and software implements that male upt all the system.

The system of the invention is really a projet with multiple different configurations, being common to the various models the method and or solution of the digitalization of graphics that is made in the device called ECD abreviation of (Station of Data Capture).

### PRIOR ART

As basic antecedents of the system for capture, treatment, comparison and visualization of classical element (trademarks, signatures, schemes, diagrams) stand out 539.209/8 converted into an european patent n0.5870201/2 for a system which comprised the functional association of a circuit of digitalization and visualization; a control circuit; a circuit of memory management and an inlet or outlet interface.

The prior art lacked, as a cause mainly accused in practice, the optimation of the limired visualization of the image, concentrated witch despise or elimination of the documentary contour; the normalization of the size or centering of it; the digitalization of sensibility of the image and visualized confirmation of the process made.

### OBJECT OF THE EXPOSITION:

Basically we are going to stand out those points that mark the distinctive characteristics of the system object of the invention versus other methods used in systems of a similar purpose.

All the elements described hereunder are a part of a device of the system which is called ECD (Station of Data Capture) and makes up the object of this exposition.

The functional elements and methods used are the following.

1 - VIDEO CAMERA.

2 - MACRO-ZOOM LENS asoptical element.

3 - Taking of the image on an EXPOSITION PLATE.

4 - Ilumination through a LIGHTS BOX.

5 - Disposition and construction of the OPTICAL WAY of the image.

6 - Visualization of the image to be digitalized by DIRECT MONITOR prior to the digitalization.

7 - Digitalization of the image through the SCANNER PLATE (covered by patent no 539.209).

8 - Control of sensibility through the UCE unit (Scanner Control Unit).

9 - GRAPHIC MONITOR for visualization of the result of the process.

### INVENTIVE ACTIVITY

GENERAL DESCRIPTION OF THE SYSTEM AS PER THE INVENTION:

The fundamental object of the system is that of capturing images with an optical quality, compress them to reduce their occupation in memory to the minimum and store them to be able to recuperate them in the most rapid possible mode when the need comes.

We will explain here in a summarized way the operation of the method of image take, to center concept that the use of some concrete elements and not other alternative ones allow to obtain the ideal combination and characteristic of the system.

To obtain these objectives the system starts from a VIDEO CAMERA, CCIR, standard, in black and white, with a vidicon type sensible element, said camera takes the image through a MACRO-ZOOM LENS.

The area of the document to be digitalized is located above the EXPOSITION PLATE and is visualized through the glass said plate is provided, for the fact of said exposition plate being a smooth surface on level with the work talbe, makes possible that any size of document be susceptible of digitalization as same slides on the exposition plate, until through the optical glass of same the area of interest is centered.

The graph is question is lit, with the light coming from a device called LIGHTS BOX, that makes a unit with the Exposition plate.

The image is shown in a DIRECT MONITOR, which allows to control that the area of the document that we are going to treat be the desired one.

In the event in that the dimension of the graph to be digitalized is not adequate, for being excessively big or small with respect to the average, one may act on the control of the MACRO-ZOOM LENS that allows us to modify optically the size of the image that we will visualize in the DIRECT MONITOR and which we wish to digitalize.

Once it has been controlled that the image is the correct one and its size adequate one, you proceed to the digitalization through the computer that with an adequate software described on a separate document, and which does not affect this patent for being the objetof another type of legitimate cover, allows the capture of the image using the SCANNER PLATE as per the definition of patent no. 539.209/8.

The process is complated by the repetition of this operation under control of the program and with the complementary control of the UCE device that, intrinsicly linked to the SCANNER PLATE, allows the control so that a digitalized replica of the original image may be shown in the GRAPHIC MONITOR the ECD has available and thus the operator has all the necessary information and controlto attain a perfect result.

## DESCRIPTION OF THE DRAWINGS

A practical performance, as per the invention of the mechanic organ the system incorporates, as per preferent idea of same, as well as a version also preferent of the UCE, will be made at once, on making reference the sheets of drawings enclosed to this specification in which schematically and just as an example, a non limitative idea of the invention is given.

In the drawings:

Figure 1.- Is an elevation veiw theoretically cut as per a vertical plane for verification of the internal organs of the exposition apparatus, as well as that of capture and visualization of images.

Figure 2.- Is a side elevation veiw, seen from the side regarding figure 1.

Figure 3.- Is a view of the scheme of the UCE circuit.

With regard to said illustrations, it is verified the different aspect of the apparatus as per the invention; made up of a housing or main body -1- in which upper part there is a top part or expositor subassembly -2- and inside the projection organ -3- a subassembly of repetition of the image -4-.

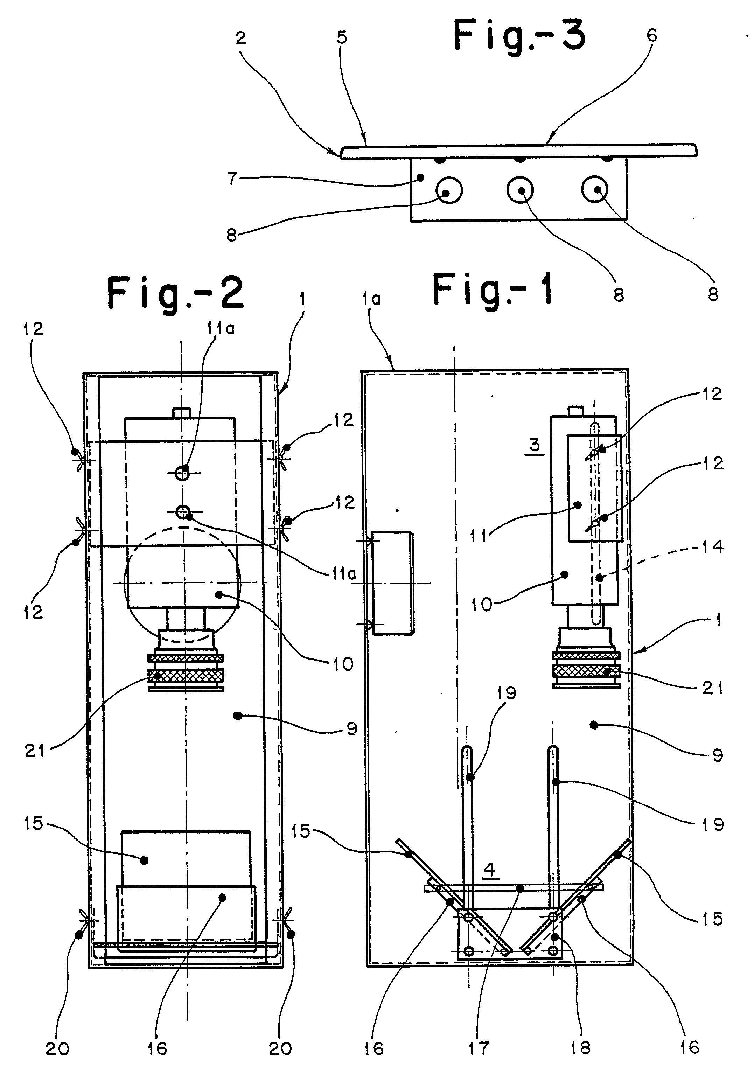

With respect to figure 3, the expositor subassembly -2- comprises a top part or smooth surface -5- which concentrically behaves a transparent screen -6- which will be lit by a lights box -7- located right under the screen -6- and laterally provided with the lampholders -8- for the location of the lights. In this way, the expositor space, is perfectly iluminated in all its contour.

The subassembly -2- is mounted on the upper zocle -1a-of the main body -1-.

The proyection means -3- are integrated by a video camera -10- provided with a MACRO-ZOOM lens -21- mounted on the chassis -11- and fastened by means -11a- and this chassis -11- is fastened and guided in the slots -14- made in the main body -9- through dismountable fixation elements -12-.

Finally, the subassembly of repetition of the image -4- is mainly integrated by a set of mirrors -15- located directly with respect to the screen -6- and inbetween with an angle of $90^\circ$ which bisectrix would coincide with the imaginary axle perpendicular to the geometrical center of the screen -6-.

The mirrors -15- are fastened to flanges -16- inbetween stressed by tighteners -17- and are ensured on the sides of a chassis -18- in "U" that is fastened on the front walls, fore and rear, of the body -9- in said slots -19- and through adjustable elements -20-.

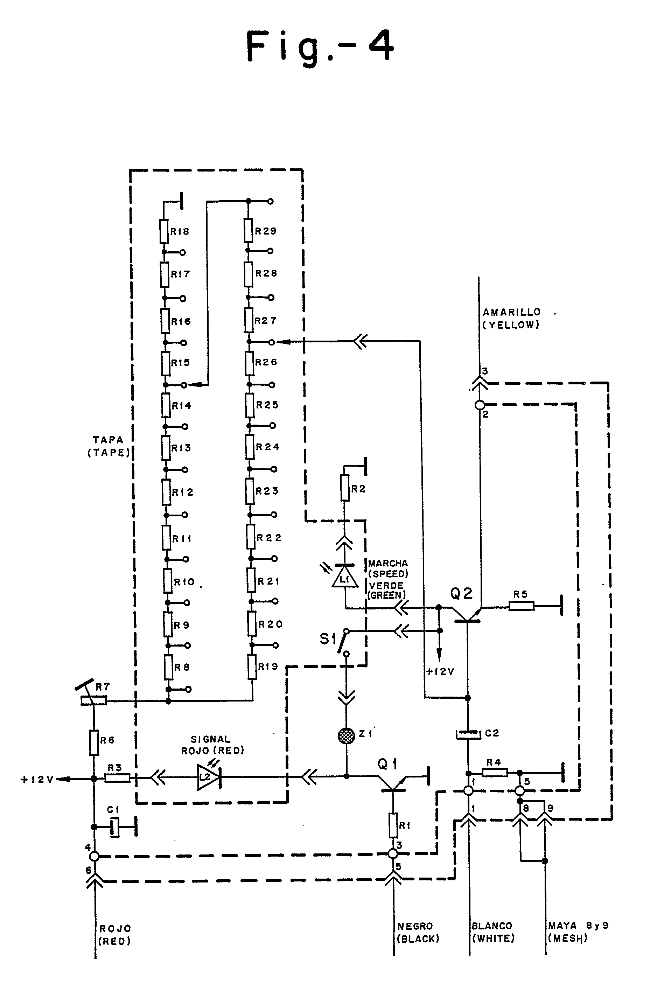

The unit of control of the scanner (fig.4) of digitalization of the image, having as a task the control of the sensibility of said digitalization or modulation of the digitalization, is a table module which is connected to the chassis of the computer via a connector of several pins called M.

The circuit gets feeding from the +12V adjusted on the ESC plate, that voltage filtered by C1, is visualized through the green led called START.

The voltage of +12V feeds the alarm circuit made up by a Q1 transistor which base is activated through R1 by the SIGNAL coming from the ESC, this causes L2 to get lit (red led) AND the buzz S1 sound if S1 is in the ACOUSTIC position

The main work of the UCE is made by injecting to the transistor Q2 a continuous voltage coming from the divider formed by the R6 and R29 resistances, and which adds a continuous to the video signal that is applied to its base through C2, so that the result be an identical signal, but mounted on a continuous components that allows to move it with respect to Ø volts. Finally Q2, mounted as an emitter follower, generates to this result over R5 and is returned to ESC.

The graphic image located in the mode already explained, is illuminated thanks to a device -7- sticked to the exposition plate -2- on its lower part, so that it is included inside the table -1- of the EDC. Said device is called LIGHTS BOX -7- and has ilumination lamps -8- located on the upper and lower part of the exposition rectangle -6-. The lamps and their accessories are housed inside a metal box -7- which is reflecting, of metacrylate, translucid (not referenced) inciding over the area of the document we wish to digitalize.

At this point we have available a VIDEO CAMERA -10-provided with a MACRO-ZOOM LENS -21- and on the other part of an Exposition plate -6- provided with a LIGHTS BOX -7-which provides the ilumination necessary for the digitalization of the graphic.

All these elements are interrelated, by a mechanic device called OPTICAL WAY -3- and -4- which constructive detail is included in figus. 1 and 2, and which develops the following task:

As the Exposition plate -2- is located on level with the surface of the work table -9- and the lights box -7-under same, in a mode solidary with the first one, it is required that the image that appears through the crystal rectangle -6- of the Exposition plate -2- may get to the VIDEO CAMERA -10- through the MACRO-ZOOM LENS -21-.

There exists the difficulty of making the focusing of the lens -21- so that it takes en adequate area of the document of origin and said focusing depends directly on the sensible element of the camera -10- which is the spot where the image is formed.

Being limited the size in height of the work table -9-over which the assembly is mounted, it has been included an OPTICAL ROUTE formed by a set of mirrors -15- of a fore metalization, to avoid the formation of double images, which allows to increase remarkably the distance existing between the objet exposed in -6- and the camera -10-.

The assembly -3- and -4- is mounted on a metal stand -11- and -18- of the camera -10- and the mirrors -15- which allow the slide of both elements by some slots -14- and -19-. respectively, which allow to vary the distance which is of interest to us, at will.

## ARGUMENTATION OF THE EXPLANATION OF OPERATION

The system uses a VIDEO CAMERA -10- for the digitalization of a concrete zone of a document containing a graphic (signature) that is of interest to us, normally said document is the board of signatures of the customer of a banking entity. This fact redounds in benefits for the system versus the method of digitalization by CCD scanner patent no. 539.209 of complete document by a series of reasons we are exposing.

I may be digitalized only a concrete area of the document this particularity avoids the additional work of comparing the correct area that is not of interest, in the event of having digitalized all the surface of the document.

It may occur that by using a CCD scanner, strict areas are limited, in which it is assumed that, if the board has a standard format, the signatures to be digitalized are to be there, that is practically unfeasible as it could only be applied if the boards were of a rigid and unique format, which is not the case of those boards of signatures already existing since the creation of the bank entity, this will originate that the signatures suffer important deviations with respect to their location.

It is the use, thus, of the VIDEO CAMERA -10- the principle of the series of elements that we coordinate to attain the method of digitalization of the system.

Said camera -10- is provided with an optical lens of MACRO-ZOOM characteristics -21- which allows to modify the area to be digitalized in a range from eight times approximately, taht is, that it allows us to digitalize with the same absolute size graphs taht originally differ up to eight times under occupied area.

The document to be digitalized is placed horizontally with the graphic to be digitalized dwnwards, over a surface called exposition plate -2- made up by a base frame -5- of plastic material in which it has been fitted a rectangular plate of opticalcrystal -6- transparent, so that its upper surface is levelled with the plastic frame -5- of the exposition plate -2-.

With this particular disposition it is attained that the size of the document to be digitalized does not make up a problem at all, as one may operate with same simply sliding it throughthe surface of the exposition plate -2-. Different from the systems using CCD scanner that, for having to feed the document through the very scanner, they have limitations with respect to the situation of the graphic in the document and the physical size of same.

Once already solved all the details relative to the physical disposition, we face a device which supplies a video image of an area of document that we have simply deposited on a table -1-. Said image is susceptible to be visualized through a video monitor -10- called DIRECT MONITOR being shown to the operator at the same time it is connected to the SCANNER PLATE to be digitalized by same when the operator so considers.

The Scanner plate (protected by patent 539.209) is the element that allows to convert the video image in data susceptible of being treated by the computer which includes the system through the programs (software) adequate and exclusive of the system.

The UCE device (fig.4) (SCANNER CONTROL UNIT) is an undetachable part of the Scanner plate. Its work is that of allowing the operator to adjust the sensibility of the digitalization to compensate possible faults, either of the background shade of the board of signatures, or of the very traces of the graphic that makes up the signature.

The duplicity of control monitors is fundamental and marks another of the important differences of the system, as with this method it is allowed, on one part, that the operator controls visually the graphic to be dealt with and modify its position with enough elements of judgment, a thing impossible with other methods that do not make it possible the direct visualization of the image.

The second steps consists in the comparison of the image already digitalized, shown in the GRAPHIC MONITOR, with the original one of the DIRECT MONITOR, an option only allowed by the combination previously described.

Once conveniently described the nature of the invention it is made evident to the due purposes that same is not limited to the exact details of this exposition, but on the contrary in it will be introduced the modifications considered due, provided they do not alter the essential characteristics of same that are claimed hereunder.

## Claims

1.- System and apparatus of digitalization and identification of signs and/or facsimiles made up by a station od data capture ECD that integrates a scanner unit for digitalization of the image, essentially characterized because the development of the system comprises the exposition of the document with a specific delimitation of the taking of the image, with builtin ilumination of same and the contour; the disposition of an optical way of the image; the visualization of the image prior to digitalization; the digitalization of the image; control of sensibility of said digitalization and visualization of the result of the process.

2.- System and apparatus of digitalization and identification of signs and/or facsimiles, because the system of the prior claim comprises a device, characterized as it is made up of a VIDEO (10) camera, assisted by a MACRO-ZOOM (21) lens, as optical element; of an exposition plate (2) for the taking of the image (6) assistedby a lights box (7); of an organ to limit the optical way (4) of the image, complemented with a direct monitor for visualization of the image prior to digitalization; a sensibility control unit (UCE-fig.4) of the digitalization and a graphic monitor for visualization of the result of the process.

3.- System and apparatus of digitalization and identification of signs and/or facsimiles, which device comprises a video camera (10) and a MACRO-ZOOM (21) lens, as per the previous claim, characterized in that it is directly focused to the disposition of the optical way (4) in an adjustable mode through a stand (11) movable over a set of vertical slots (14) provided in two parallel walls of the camera or table (9) where the physical assembly of the device (1) is housed.

4.- System and apparatus of digitalization and identification of signs and/or facsimiles, which device comprises a plate of exposition of the docuement (2) as per claim 2, characterized in that it has a top part or frame (5) which contains, preferably concentric, a transparent plate (6) of exposition associated to a lights box (7) located right under said plate, provided with indirect lights (8), reflected by the inner coating of methacrylate plates of said box (7).

5.- System and apparatus of digitalization and identification of sings and/or facsimiles, which device comprises the disposition of an optical route (4) as per claim 2, characterized in that it is made up by a set of plain mirrors (5) of fore metalization set forth bisectrix conincides ideally with the vertical axle of summetry of the screen (6) of exposition and centering of the image.

6.- System and apparatus of digitalization and identification of sings and/or facsimiles, comprising an optical way (4) as per the previous claim, characterized in that the mirrors are mounted on a set of flanges (16) in "U" streessed by tighteners (17), transverse and set on a chassis (18) at the same time set and guided on a set of vertical slots (19) made in two parallel walls of the general body (9) of the table (1) and ensuirng these by organs (20) of fixation, which allows to adjust the positions.

7.- System and apparatus of digitalization and identification of signs and/or facsimiles, comprising a control unit of the digitalization (UCE-fig.4) as per claim 2, essentially made up by a circuit that is characterized because its main control work is made by injecting to the transistor (Q2) a continuous voltage coming from the divider made up by a pack of reistances (R6 a R29) adding a continuous to video signal which is applied to its base through (C2) resulting an identical signal but mounted on a continuous component that allows to move it Ø volts, returning it finally to the digitalization scanner through the transistor (Q2) which mounted as a followeremitter, generates this result over the resistance (R5).

8.- System and apparatus of digitalization and identification of signs and/or facsimiles comprosing a unit of the control of sensibility of the digitalization, as per claim 7, which is made up of a circuit characterized because supplementarily, the feeding voltage is filtrated by (C1) and visualized through a green led (START), feeding at the same time an alarm circuit made up by a transistor (Q1) which base is activated through a resistor (R1) by the signal (SIGNAL) coming from the scanner, causing to light (L2) (red led) and sound the buzz if (S1) is in the (ACOUSTIC) position.

EP 0 343 308 A1

Fig.-3

Fig.-2

Fig.-1

# Fig.-4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 175 166 (G. BRUGGER) * Page 7, line 33 - page 9, line 5 * | 1,2,4 | H 04 N 1/10 <br> H 04 N 1/40 |
| A | US-A-3 824 339 (EISENBERG) * Column 2, lines 13-28,50-54 * | 1-3 | |
| A | US-A-3 267 293 (V.A. HINDS) * Column 5, line 38 - column 6, line 11 * | 1,7 | |
| A | PATENT ABSTRACTS OF JAPAN, vol. 11, no. 119 (E-499)[2566], 14th April 1987; & JP-A-61 265 958 (TOSHIBA CORP.) 25-11-1986 * Abstract * | 1,2,5 | |
| A | DE-A-2 728 731 (STANDARD ELEKTRIK LORENZ AG) * Page 5, lines 20-25; page 6, lines 2-5 * | 1,2 | |
| A | GB-A-2 077 548 (DAINIPPON PRINTING CO. LTD) * Page 1, lines 5-25; page 5, lines 71-79,111-125; page 10, line 124 - page 11, line 127 * | 1,2,7 | **TECHNICAL FIELDS SEARCHED (Int. Cl.4)** <br><br> H 04 N 1/00 |

The present search report has been drawn up for all claims

| Place of search | Date of completion of the search | Examiner |
|---|---|---|
| THE HAGUE | 31-01-1989 | HAZEL J.F. |

EPO FORM 1503 03.82 (P0401)